# EUROPEAN PATENT APPLICATION

(11) **EP 1 557 576 A1**
(43) Date of publication of application: **27.07.2005**
(21) Application number: 04001603.2
(22) Date of filing: 26.01.2004
(51) Int. Cl.: F16B 25/00, F16B 33/02

(54) **Screw**

(71) Applicant: Su, Guo-Cai, Kaohsiung City 806 (TW)
(72) Inventor: Su, Guo-Cai, Kaohsiung City 806 (TW)
(74) Representative: Viering, Jentschura & Partner

(57) **Abstract**

The present invention provides a screw (1) comprised of a head (11), a shank (12) under the head in a whole body, and a thread (13) helically built upon the outside body of the shank; wherein, said thread projecting from the cylindrical body of the shank is consisted of an upper flank, a lower flank, and a peak on the joint line of the upper and lower flanks, and an even number of axial slots (534) formed on the thread; the advantage being that every axial slot is beveled with a back angle to form a sheared section from the upper flank to the lower flank, so as to form a cutting edge for facilitating rapid fastening with smaller tapping torque during tapping in.

## Description

### BACKGROUND OF THE INVENTION

### 1. Field of the Invention

This invention relates to a screw, more particularly to a rapid tapping screw with less torque.

### 2. Description of the Related Art

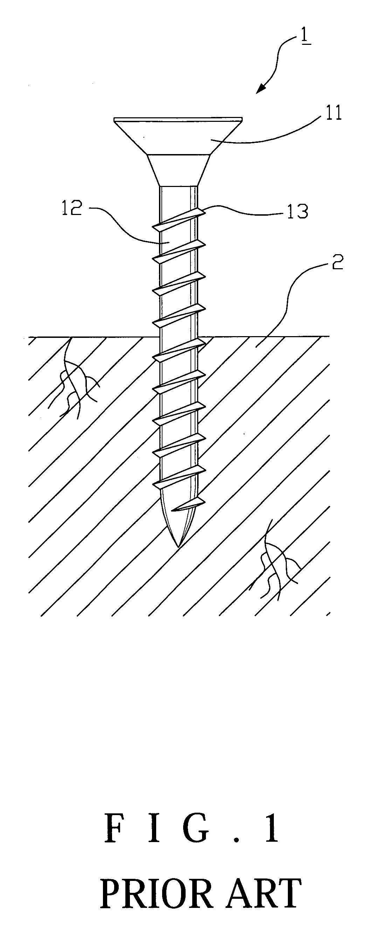

In accordance with the conventional screw, as shown in Fig. 1, includes a head 11 and a shank 12 connecting with the head 11; wherein, there are several helical threads 13 built upon the surface of said shank 12.

When the conventional screw 1 is screwed in a wooden object 2, along with the shank 12 screwing in, by means of the shearing action of the threads 13, it is fastened in there; but because the threads 13 can not cut through the wooden fabric, so that under the affects of some facts like the wooden fabric chips could not be removed out rapidly, and so on, the tapping resistance is increased, hence the worker has to apply bigger tapping force on it in order to implant the screw 1 into the object 2, even if the greater tapping torque applied occurs the screw 1 overloading to be broken up. So the conventional screw 1 should be improved in design.

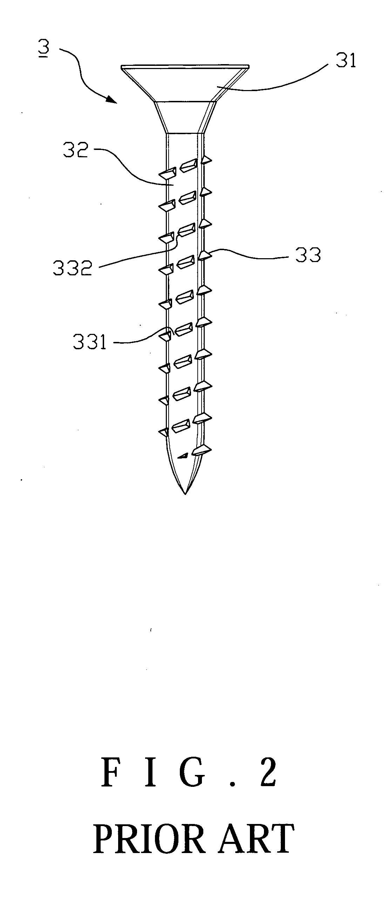

For this sake, there are some manufactures innovated the conventional screw 1, an innovated screw 3, as shown in Fig. 2, is came out, which is comprised of a head 31 and a shank 32 connecting with said head 31, and a thread 33 helically built upon the shank 32, wherein on the thread 33 there is even number of axial slots 331 formed.

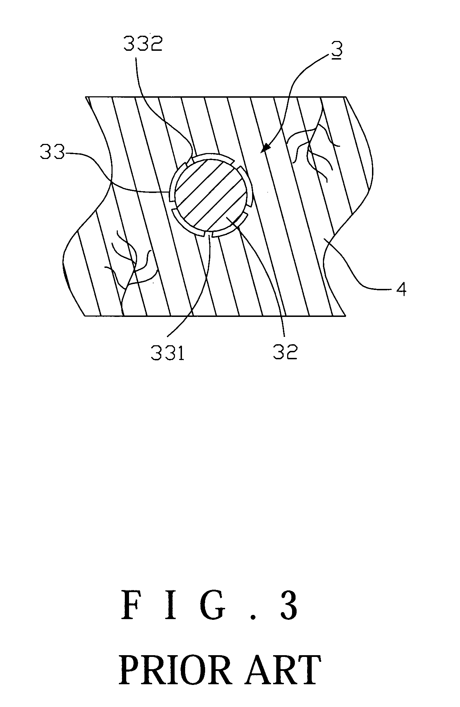

Referring to Fig. 3, when fastening the screw 3, taking the advantages of the axial slots 331 of said thread 33 increases the containing space of the wooden fabric chips, meanwhile cooperating to the cutting process of said thread 33, the side edges of the axial slots 331 is designed to work as cutting rims for getting rapid tapping with less force goal.

But, in practice, there are some shortcomings existing in the screw 3 as followings:
1.Not getting desired fastening effect:
   When tapping into the object 4, due to the small tooth height of the thread 33 projected up from the shank 32, even though the thread 33 is cut cross with the axial slots 331, the cutting effect could not get desired level in cutting and holding chips, therefore the actual practice effect of the screw 3 has not improved obviously comparing with the conventional screw 1.
2.Tapping resistance still big:
   As previously discussed, cutting said axial slots 331 naturally forms a vertical side 332 crossing the thread 33, therefore, when tapping the thread 33 in, the vertical side 332 directly strikes and cuts the flexible object 4, so that the elastic wooden fabric can not be cut through immediately, on the contrary the wooden fabric twins on the axial slot 332 and the shank 32, further to increase the tapping resistance of the screw 3.

### SUMMARY OF THE INVENTION

It is therefore a main object of the present invention to provide a rapid tapping screw with lower tapping torque.

For archiving the obj ect, the present invention provides a screw comprised of a head, a shank and a thread helically built on the shank; wherein, on the thread there is even number of axial slots formed, meanwhile every axial slot is beveled with a back angle to form a sheared section from the upper flight to the low flight, so as to form a cutting edge, as tapping the screw, the cutting lips will improve the cutting speed to get rapid fastening with less tapping torque goal.

### BRIEF DESCRIPTION OF THE DRAWINGS

The accompanying drawing is included to provide a further understanding of the invention, and is incorporated in and constitutes a part of this specification. The drawing illustrates an embodiment of the invention and, together with the description, serves to explain the principles of the invention. In the drawing,
Fig. 1 is a sectional view of the prior art.
Fig. 2 is a side view of the second prior art.
Fig. 3 is a cross-section view showing the implanted stated of the second prior art.
Fig. 4 is a side view of the present invention.
Fig. 5 is a part enlarged view showing the thread of the present invention.
Fig. 6 is a cross-section view showing the implanted stated of the present invention.

### DETAILED DESCRIPTION OF THE PREFERRED EMBODIMENTS

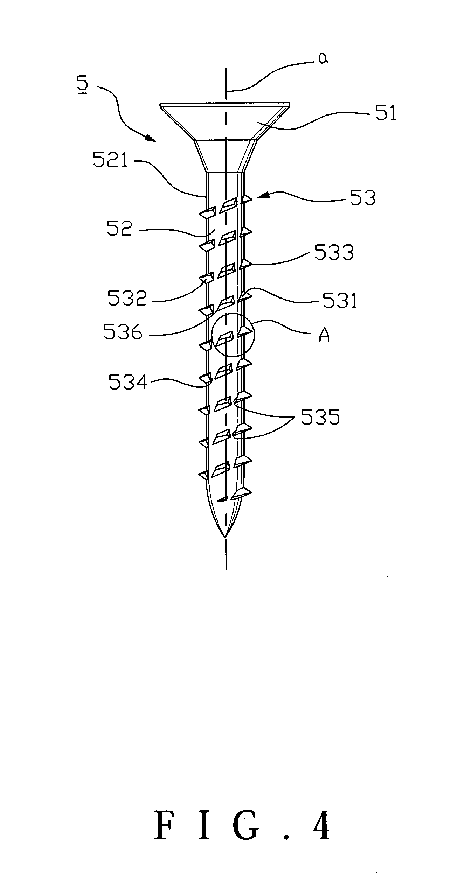

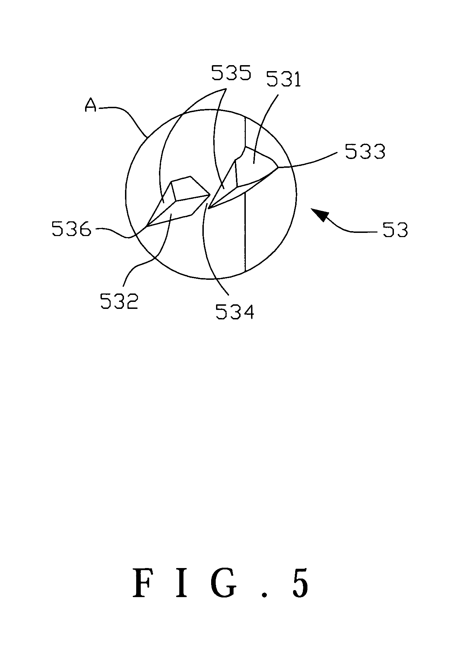

Referring to Fig.4 and Fig. 5, the first embodiment of the present invention provides a screw 5 consisted of a head 51, a shank 52 under the head 51 in a whole body, and a thread 53 helically built upon the outside trunk of the shank 52; wherein, said shank 52 has a base circle surface 521 surrounding the axis a, and the helical thread 53 projected from the base circle surface 521, said thread 53 is consisted of an upper flight 531, a low flight 532, and a peak 533 on the joint line of the upper and low flights 532 533, and an even number of axial slots 534 formed on the thread 53 of the shank 52 in equidistance; the feather is that every axial slot 534 is beveled with a back angle to form a sheared section 535 from the upper flight 531 to the low flight 532, so as to form a cutting edge 536.

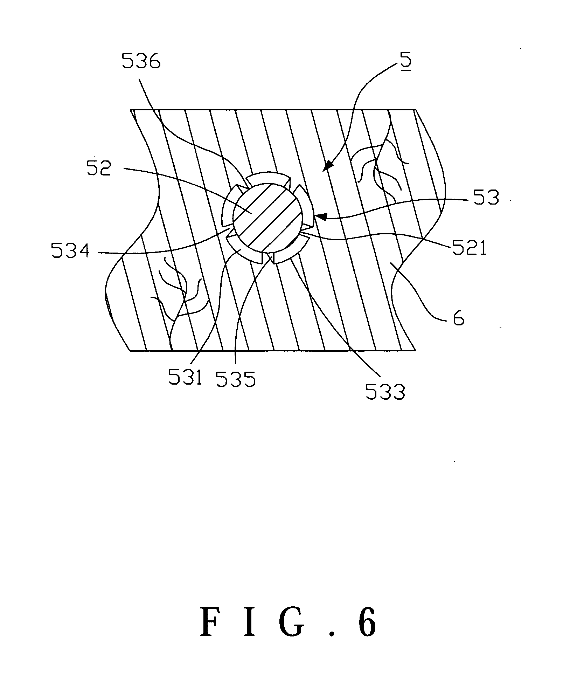

Referring to Fig. 5 and Fig. 6, when securing the screw 5 on an object 6, the worker should vertically press the screw 5 on the surface of the object 6 with the bottom end, and exert continuous tapping force on the head 51 of the screw 5 so that the thread 53 is turned simultaneously, in order to tap into the object 6, along with the implanting of the thread 53, besides the peak 533 of the thread 53 cuts the object 6, the cutting lips 536 consisted of the sheared section 535 and the low flights 532 can cut simultaneously as a hatchet, so that as screwing the thread 53 the cutting lips 536 can circularly cut for rapidly and efficiently shear the interlace and twined wooden fabric, further to reduce the tapping resistance to get rapid fastening effect, and to reduce the tapping torque; of cause, the uncut wooden fabric by the cutting lips 536 can be led by the sheared section 535 to the rear cutting edge for cutting through.

In accordance with above description, the improvement of the present invention based on the prior art can be obviously found as following:
1. Better fastening effect: when screwing into the object 6 with the screw 5, due to the sheared section 535 at the side of the axial slot 534beveled on the thread 53, the size of the axial slot 534 is expended to increase the space of containing chips for facilitating to cut fluently.
2.Rapid fastening with smaller tapping torque: as above description, the sheared section 535 beveled on the thread 53 at the side of the axial slot 534 cooperates to the low flight 532 to form a cutting lip 536 as sharp as a hatchet, therefore as fastening the thread 53, besides taking the original peak 533 to cut, the cutting lip 536 is also to shear the wooden fabric firstly so as to efficiently cut through the interlace and twined wooden fabric, of cause, the uncut wooden fabric by the cutting lips 536 can be led by the sheared section 535 to the rear cutting edge for cutting through, therefore it is helpful to reduce command of tapping torque as screwing the screw 5 for prevent the screw 5 from breaking up.

According to the above description, the main feather of the present invention is to bevel a sheared section on the thread at the side of the axial slot, and said sheared section cooperates with the low flight to form a cutting lip, so as to help the thread rapid cutting, containing chips as tapping in, meanwhile to get rapid fastening with smaller tapping torque.

While the present invention has been described in connection with what is considered the most practical and preferred embodiments, it is understood that this invention is not limited to the disclosed embodiments but is intended to cover various arrangements included within the spirit and scope of the broadest interpretations and equivalent arrangements.

## Claims

1. A screw comprised of a head, a shank under the head in a whole body, and a thread helically built upon the outside trunk of the shank; wherein, said thread projected from the circular trunk of the shank is consisted of an upper flight, a low flight, and a peak on the joint line of the upper and low flights, and an even number of axial slots formed on the thread; the feather is that every axial slot is beveled with a back angle to form a sheared section from the upper flight to the low flight, so as to forma cutting edge for facilitating to rapid fastening with smaller tapping torque as tapping in.
